# EUROPÄISCHE PATENTANMELDUNG

(11) **EP 3 150 435 A1**
(43) Veröffentlichungstag der Anmeldung: **05.04.2017**
(21) Anmeldenummer: 16191270.4
(22) Anmeldetag: 29.09.2016
(51) Int. Cl.: B60Q 3/76, B60Q 3/80

(54) **VERFAHREN ZUM BETRIEB EINER INNENBELEUCHTUNGSEINRICHTUNG FÜR EIN KRAFTFAHRZEUG, INNENBELEUCHTUNGSEINRICHTUNG FÜR EIN KRAFTFAHRZEUG UND KRAFTFAHRZEUG**

(30) Priorität: 02.10.2015 DE 102015012842
(71) Anmelder: AUDI AG, 85045 Ingolstadt (DE); Hella KGaA Hueck & Co., 59557 Lippstadt (DE)
(72) Erfinder: Kowatzki, Stefan, 85134 Stammham (DE); Wörmann, Wolfgang, 85304 Ilmmünster (DE); Heinrich, Jürgen, 79199 Kirchzarten (DE); Allouis, David, 49186 Bad Iburg (DE)

(57) **Zusammenfassung**

Verfahren zum Betrieb einer Innenbeleuchtungseinrichtung (1, 1', 1") für ein Kraftfahrzeug (8), umfassend eine Leuchteinrichtung (L, L') und eine Sensoreinrichtung (S, S'), welche eine Position eines Bedienobjekts (6) für die Leuchteinrichtung (L, L') in ihrem Erfassungsbereich erfasst, wobei die Leuchteinrichtung (L, L') in Abhängigkeit von Sensordaten der Sensoreinrichtung (S, S') gesteuert wird, wobei die Leuchteinrichtung (L, L') mehrere ansteuerbare Leuchteinheiten (L1 - L3, L1' - L7') aufweist, welchen jeweils ein in dem Erfassungsbereich definierter Ortsabschnitt (O1 - 03) zugeordnet ist, wobei bei in einem Ortsabschnitt (O1 - 03) detektierten Bedienobjekt (6) die zugeordnete Leuchteinheit (L1 - L3, L1' - L7') aktiviert wird und aktivierte, nicht dem Ortsabschnitt (O1 - O3) zugeordnete Leuchteinheiten (L1 - L3, L1' - L7') deaktiviert werden.

## Beschreibung

Die Erfindung betrifft ein Verfahren zum Betrieb einer Innenbeleuchtungseinrichtung für ein Kraftfahrzeug, umfassend eine Leuchteinrichtung und eine Sensoreinrichtung, welche eine Position eines Bedienobjekts für die Leuchteinrichtung in ihrem Erfassungsbereich erfasst, wobei die Leuchteinrichtung in Abhängigkeit von Sensordaten der Sensoreinrichtung gesteuert wird. Daneben betrifft die Erfindung eine Innenbeleuchtungseinrichtung für ein Kraftfahrzeug und ein Kraftfahrzeug.

Zur Ausleuchtung eines Innenraums eines Kraftfahrzeugs sind mechanische, sogenannte kardanische, Innenbeleuchtungseinrichtungen bekannt, bei denen die Leuchteinrichtung durch ein überkreuz angeordnetes Zwei-Achs-System oder eine Kugel-Drehmechanik gelagert ist, um die Abstrahlrichtung der Leuchteinrichtung manuell zu verändern. Ein solcher komplexer mechanischer Aufbau ist jedoch äußerst aufwändig und nimmt einen großen Bauraum und eine große Bautiefe bei einer Anordnung im Dachhimmel des Kraftfahrzeugs in Anspruch. Darüber hinaus lässt sich die Freigängigkeit einer solchen manuellen Richtungsverstellung nur mit Schwierigkeiten korrekt einstellen, wobei sich besondere Nachteile hinsichtlich des Verschleißes, der Geräuscherzeugung und der Insassensicherheit durch herausragende mechanische Elemente gezeigt haben.

Daneben sind rein elektronische Innenbeleuchtungseinrichtungen bekannt. Sie weisen typischerweise eine Leuchteinrichtung auf, die Licht weitwinklig zum Ausleuchten großer Flächen des Innenraums oder fokussiert, beispielsweise als Leseleuchte, abstrahlt. In jüngerer Zeit wurde ferner vorgeschlagen, neben einer Leuchteinrichtung eine Sensoreinrichtung vorzusehen, mittels welcher die Position eines Bedienobjektes, insbesondere eines Fingers eines Nutzers, erfasst und die Leuchteinrichtung in Abhängigkeit von die Position des Bedienobjekts beschreibender Sensordaten angesteuert wird.

Die DE 10 2011 122 180 A1 beschreibt ein Verfahren zum Erkennen einer Betätigungsbewegung zum sensorgesteuerten Aktivieren eines Kraftfahrzeug-Ausstattungselements mittels einer kapazitive Sensoren mit überlappenden Erfassungsbereichen aufweisenden Betätigungsvorrichtung. Dazu wird eine Gesamtdauer einer erfassten Bewegung durch die Erfassungsbereiche sowie eine Überlappungsdauer der Bewegung in einem Überlappungsbereich erfasst, wonach ein Quotient aus der Überlappungsdauer und der Gesamtdauer berechnet und mit einem Grenzwert verglichen wird, der gültige Bewegungsrichtungen von ungültigen Bewegungsrichtungen trennt. Bei dem Ausstattungselement kann es sich insbesondere um eine Leuchtvorrichtung handeln.

Bei auf Sensoreinrichtungen beruhenden Innenbeleuchtungseinrichtungen ist darüber hinaus bislang nur eine Aktivierung der Leuchteinrichtung in Abhängigkeit einer in einer bestimmten Richtung ausgeführten Bediengeste möglich.

Der Erfindung liegt damit die Aufgabe zugrunde, eine flexiblere Möglichkeit zum Ausleuchten eines Innenraums eines Kraftfahrzeugs durch eine Innenbeleuchtungseinrichtung anzugeben.

Zur Lösung dieser Aufgabe ist erfindungsgemäß vorgesehen, dass die Leuchteinrichtung mehrere ansteuerbare Leuchteinheiten aufweist, welchen jeweils ein in dem Erfassungsbereich definierter Ortsabschnitt zugeordnet ist, wobei bei in einem Ortsabschnitt detektiertem Bedienobjekt die zugeordnete Leuchteinheit aktiviert wird und aktivierte, nicht dem Ortsabschnitt zugeordnete Leuchteinheiten deaktiviert werden.

Die Erfindung beruht auf der Überlegung, bei der Innenbeleuchtungseinrichtung für ein Kraftfahrzeug mittels geeigneter Unterteilung des Erfassungsbereichs in definierte Ortsabschnitte eine Ansteuerung einer Leuchteinrichtung zu ermöglichen, die bei gestenartiger Bewegung des Bedienobjekts eine einer mechanisch verstellbaren Innenbeleuchtungseinrichtung ähnliche Veränderung der Lichtverteilung ermöglicht. Dazu weist die Leuchteinrichtung mehrere Leuchteinheiten, auf, denen jeweils ein Ortsabschnitt des Erfassungsbereichs zugeordnet ist. Ein Ortsabschnitt ist damit ein dreidimensionaler Teil des Erfassungsbereichs, wobei selbstverständlich mehrere Leuchteinheiten auch demselben Ortsabschnitt zugeordnet sein können. Es ist erfindungsgemäß vorgesehen, dass die Sensoreinrichtung zunächst eine Position des Bedienobjekts, insbesondere eines Fingers, in einem Ortsabschnitt erfasst und die dem Ortsabschnitt zugeordnete Leuchteinheit aktiviert. Gleichzeitig werden nicht dem Ortsabschnitt zugeordnete Leuchteinheiten deaktiviert. Befindet sich das Bedienobjekt gleichzeitig in mehreren, insbesondere sich überlappenden Ortsabschnitten, werden selbstverständlich sämtliche diesen Ortsabschnitten zugeordneten Leuchteinheiten aktiviert. Eine Auswertung der Sensordaten der Sensoreinrichtung und die Ansteuerung der Leuchteinheiten erfolgt dabei bevorzugt mittels einer Steuereinrichtung der Innenbeleuchtungseinrichtung oder des Kraftfahrzeugs, in dem die Innenbeleuchtungseinrichtung verbaut ist.

Das erfindungsgemäße Verfahren ermöglicht mit Vorteil, dass die Aktivierung der Leuchteinheiten der momentanen Position des Bedienobjekts folgt, so dass eine gestische Steuerung der Innenbeleuchtungseinrichtung realisiert wird. Dabei wird nicht zunächst ein Bewegungsverlauf des Bedienobjekts im Erfassungsbereich erfasst und ausgewertet, wonach eine vordefinierte Aktivierungsfolge der Leuchteinheiten abgespielt wird. Vielmehr werden die Leuchteinheiten instantan in Abhängigkeit einer momentanen Position des Bedienobjekts in den Ortsabschnitten des Erfassungsbereichs angesteuert. Einem die Position des Bedienobjekts verändernden Nutzer wird mithin der Eindruck vermittelt, als bewege er die gesamte Leuchteinrichtung wie bei einer mechanisch aufgehängten kardanischen Innenbeleuchtungseinrichtung. Mit besonderem Vorteil ergibt sich so eine intuitiv verständliche Gestensteuerung. Wird das Bedienobjekt beispielsweise in einer schwenkenden Bewegung durch mehrere Ortsabschnitte geführt, ergibt sich eine diese auch als Wischen bekannte Bewegung entsprechende Folge von kurzzeitig aktivierten Leuchteinheiten, wobei die zuletzt aktivierte Leuchteinheit im aktivierten Zustand verharrt. Darüber hinaus kann durch ein Einbringen des Bedienobjekts in einen Ortsabschnitt und daran anschließendes Entfernen des Bedienobjekts aus diesem Ortsabschnitt, mithin durch eine tippende Bewegung, nur die wenigstens eine mit dem entsprechenden Ortsabschnitt verknüpfte Leuchteinheit aktiviert werden. Durch das erfindungsgemäße Verfahren ist die Innenbeleuchtungseinrichtung in einer Vielzahl zusätzlicher Beleuchtungszustände über ein reines Ein- und Ausschalten der gesamten Leuchteinrichtung hinaus betreibbar und bietet einem Nutzer somit eine wesentlich erhöhte Flexibilität. Zudem kann eine mechanisch aufwändige und fehleranfällige kardanische Aufhängung der Leuchteinrichtung vermieden werden.

Wie bereits beschrieben können sich Ortsabschnitte des Erfassungsbereiches überschneiden, es wird jedoch besonders bevorzugt, wenn disjunkt definierte Ortsabschnitte verwendet werden. Dies ermöglicht einem Nutzer eine intuitiv klare Zuordnung von Positionen des Bedienobjekts zu der jeweiligen Reaktion einer Leuchteinheit. Es ist dabei insbesondere zu beachten, dass im Vergleich zu eingangs genannten herkömmlichen Innenbeleuchtungseinrichtungen nicht notwendigerweise ein Überlappungsbereich einzelner Ortsabschnitte vorzusehen ist, um eine gültige Bediengeste zu erkennen. Es ist darüber hinaus auch denkbar, dass wenn sich das Bedienobjekt aufgrund seiner Ausdehnung in mehreren Ortsabschnitten gleichzeitig befindet, die Position des Bedienobjekts lediglich einem Ortsabschnitt zugeordnet wird.

Es wird darüber hinaus bei dem erfindungsgemäßen Verfahren besonders bevorzugt, wenn nacheinander mehrere eine Positionsspur bildende Positionen des Bedienobjekts erfasst werden, wonach in Abhängigkeit der erfassten Positionsspur eine vorgegebene Steueraktion ausgeführt wird. Es können mithin zusätzlich zu der instantanen Aktivierung und Deaktivierung von Leuchteinheiten in Abhängigkeit der Position des Bedienobjekts Positionsspuren, mithin bestimmte Bewegungsgesten, definiert werden, die ein Triggersignal für eine vorgegebene Steueraktion sind. Mit besonderem Vorteil können so zusätzliche Funktionalitäten der Innenbeleuchtungseinrichtung implementiert werden. Zweckmäßigerweise unterscheiden sich die zu erfassenden Positionsspuren hinreichend von intuitiv klaren Bewegungen, mit denen die instantane Ansteuerung der Leuchteinheiten erfolgen soll.

Es wird dabei besonders bevorzugt, wenn eine ein Aktivieren aller Leuchteinheiten auslösende Steueraktion und/oder eine ein Deaktivieren aller Leuchteinheiten auslösende Steueraktion verwendet wird. Beispielsweise kann vorgesehen sein, dass bei einem Überstreichen sämtlicher oder einer vorgegebenen Folge der Ortsabschnitte eine vollständige Aktivierung aller Leuchteinheiten ausgelöst wird und bei einer Wiederholung alle Leuchteinheiten deaktiviert werden. Insofern kann auch vorgesehen sein, dass die vorgegebene Steueraktion zusätzlich in Abhängigkeit eines aktuellen Betriebszustands der Leuchteinrichtung ausgeführt wird.

Es ist schließlich im Rahmen des erfindungsgemäßen Verfahrens von besonderem Vorteil, wenn die Leuchteinheiten gemäß eines vorgegebenen oder vorgebbaren zeitlichen Helligkeitsverlaufs aktiviert und/oder deaktiviert werden. Es wird mithin vorgeschlagen, die Leuchteinheiten nicht schlagartig ein- oder auszuschalten, sondern einen Helligkeitsverlauf vorzugeben oder zu ermitteln, der sich über einen längeren Zeitraum erstreckt als die jeweilige Leuchteinheit für das Erreichen ihrer Zielhelligkeit bei einem sprungartigen Ein- oder Ausschalten benötigt. Im einfachsten Fall ist es beispielsweise denkbar, einen rampenförmigen zeitlichen Helligkeitsverlauf vorzugeben. Es wird jedoch bevorzugt, wenn der Helligkeitsverlauf durch eine stetige Funktion mit einem Wendepunkt beschreibbar ist. Es ist aber auch möglich einen zeitlichen Verlauf von die Position des Bedienobjekts im Ortsabschnitt beschreibenden Sensordaten oder eine daraus abgeleitete Größe geglättet, beispielsweise durch Tiefpassfilterung, als zeitlichen Helligkeitsverlauf zu verwenden. Ebenso kann der zeitliche Helligkeitsverlauf in Abhängigkeit weiterer Parameter ermittelt werden, beispielsweise von einer zusätzlich erfassten Bewegungsgeschwindigkeit des Bedienobjekts. Ein vorgegebener oder vorgebbarer zeitlicher Helligkeitsverlauf ermöglicht dabei ein weiches Aktivieren und Deaktivieren der Leuchteinheiten bzw. ein gleitend wirkendes Umschalten zwischen den Leuchteinheiten, was einen Eindruck, der dem einer drehbar gelagerten kardanischen Innenbeleuchtungseinrichtung entspricht, verstärkt.

Daneben betrifft die Erfindung eine Innenbeleuchtungseinrichtung für ein Kraftfahrzeug, umfassend eine Leuchteinrichtung, eine Sensoreinrichtung, welche zum Erfassen einer Position eines Bedienobjekts für die Leuchteinrichtung in ihrem Erfassungsbereich ausgebildet ist, und eine zum Steuern der Leuchteinrichtung in Abhängigkeit von Sensordaten der Sensoreinrichtung ausgebildete Steuereinrichtung, wobei die Leuchteinrichtung mehrere ansteuerbare Leuchteinheiten aufweist, welchen jeweils ein in dem Erfassungsbereich definierter Ortsabschnitt zugeordnet ist, wobei die Steuereinrichtung zur Durchführung des erfindungsgemäßen Verfahrens ausgebildet ist. Die Leuchteinheiten können insbesondere Glühlampen, einschließlich Halogenglühlampen und Gasentladungslampen, oder Leuchtdioden sein. Selbstverständlich ist es auch denkbar, eine Leuchteinheit aus mehreren der vorgenannten Leuchtmittelformen, insbesondere einem Array, auszubilden. Es wird ferner besonders bevorzugt, wenn die Sensoreinrichtung wenigstens einen Näherungssensor umfasst, wobei kapazitive Näherungssensoren bevorzugt eingesetzt werden.

Es wird bei der erfindungsgemäßen Innenbeleuchtungseinrichtung insbesondere bevorzugt, wenn die Leuchteinheiten unterschiedliche Abstrahlwinkel und/oder Ausleuchtbereiche aufweisen. Die Leuchteinheiten können mithin bezüglich ihrer jeweiligen Hauptabstrahlrichtung unterschiedlich zueinander ausgerichtet und/oder zueinander versetzt angeordnet sein. Gerade bei einer Positionsänderung des Bedienobjekts durch mehrere Ortsabschnitte wird so besonders effektiv ein Eindruck eines dem Bedienobjekt nachfolgenden Lichtstrahls erzeugt, wie er von einer kontinuierlich leuchtenden, mechanisch drehbar gelagerten Leuchteinrichtung vermittelt wird. Darüber hinaus kann so auch unter Aktivierung einer Vielzahl oder aller Leuchteinheiten ein weitwinklig abstrahlendes Innenlicht erzeugt werden oder bei der Aktivierung nur einer Leuchteinheit bzw. einer geringen Anzahl von Leuchteinheiten im Vergleich zu ihrer Gesamtzahl ein einziger fokussierter Lichtstrahl ("Spot") erzeugt werden. Selbstverständlich ist es dabei auch denkbar, dass bei gleichzeitiger Aktivierung mehrerer Leuchteinheiten diese nicht mit ihrer größtmöglich ansteuerbaren Helligkeit betrieben werden, sondern auf vorgegebene oder vorgebbare niedrige Helligkeitsniveaus dimmbar sind.

Es ist bei der erfindungsgemäßen Innenbeleuchtungseinrichtung außerdem besonders zweckmäßig, wenn die Sensoreinrichtung räumlich benachbart zur Leuchteinrichtung angeordnet ist. Insbesondere kann die Sensoreinrichtung derart bezüglich der Leuchteinrichtung angeordnet sein, dass Positionen des Bedienobjekts in unmittelbarer Nähe zur Leuchteinrichtung erfassbar sind. Es wird dabei bevorzugt, wenn die Innenbeleuchtungseinrichtung als eine einzelne, zusammenhängende Baueinheit ausgebildet ist. Auf diese Weise kann eine besonders kleinbauende Ausführung der Innenbeleuchtungseinrichtung realisiert werden, was vorteilhafterweise zusätzliche Designfreiheitsgrade für den Innenraum des die Innenbeleuchtungseinrichtung aufnehmenden Kraftfahrzeugs eröffnet. Es wird ferner bevorzugt, wenn die Leuchteinheiten in einem Gehäuse der Leuchteinrichtung aufgenommen sind, welches mit einer transparenten Abdeckung, die vom Licht der Leuchteinheiten durchstrahlbar ist, abschließt.

Mit besonderem Vorteil kann bei der erfindungsgemäßen Innenbeleuchtungseinrichtung ferner vorgesehen sein, dass die Sensoreinrichtung mehrere Sensoreinheiten aufweist, wobei Einzelerfassungsbereiche der Sensoreinheiten den Erfassungsbereich bilden. Die Sensoreinheiten können dabei als separate Einzelsensoren ausgebildet sein oder funktionale Unterteilungen eines einzelnen Sensors sein. Dabei kann im einfachsten Fall jeder Einzelerfassungsbereich einer Sensoreinheit einen Ortsabschnitt im Erfassungsbereich der Sensoreinrichtung definieren. Es wird jedoch bevorzugt, wenn aus Sensordaten aller Sensoreinheiten eine die Position des Bedienobjekts beschreibende Positionsinformation durch die Sensoreinrichtung ermittelt wird, welche einen Ortsbereich zugeordnet wird, der entsprechend in dem durch mögliche Werte der Positionsinformation aufgespannten Raum definiert ist.

Bei der Innenbeleuchtungseinrichtung mit mehreren Sensoreinheiten wird es dabei besonders bevorzugt, wenn wenigstens zwei Leuchteinheiten und wenigstens zwei Sensoreinheiten fluchtend angeordnet sind. Es wird so ermöglicht, dass bei einer geraden Wischgeste entlang der Fluchtrichtung die wenigstens zwei Leuchteinheiten nacheinander aktiviert und deaktiviert werden, wobei jedoch die Leuchteinheit, welche als letzte aktiviert wird, in einem aktivierten Zustand verbleibt. Entsprechend können mehrere Gruppen aus wenigstens zwei Leuchteinheiten und wenigstens zwei Sensoreinheiten fluchtend angeordnet sein, wobei bevorzugt eine mittig angeordnete Leuchteinheit vorgesehen ist, die zu mehreren dieser Gruppen gehört.

Schließlich ist es bei der erfindungsgemäßen Innenbeleuchtungseinrichtung besonders zweckmäßig, wenn wenigstens ein mit der Steuerungseinrichtung verbundenes und wenigstens einer Leuchteinheit zugeordnetes Anzeigeelement vorgesehen ist, welches zum Anzeigen der wenigstens einen aktivierten Leuchteinheit ansteuerbar ist. Bei einem solchen Anzeigeelement kann es sich beispielsweise um eine benachbart zur Leuchteinrichtung angeordnete Leuchtdiode handeln, wobei sinnvollerweise die Helligkeit des Anzeigeelements wesentlich geringer als die größtmöglich ansteuerbare Helligkeit einer jeweiligen Leuchteinheit ist. Ein Nutzer erhält so eine zusätzliche Information darüber, welche Leuchteinheiten momentan aktiviert sind, wobei es bevorzugt wird, dass ein jeweiliges Anzeigeelement nur aktiviert wird, wenn die zugeordnete Leuchteinheit nach einer vorgegebenen, an ihre Aktivierung anschließenden Wartezeit noch aktiviert ist. Besonders bevorzugt weist das wenigstens eine Anzeigeelement eine geringere Größe und/oder eine geringere Lichtleistung und/oder eine andere Farbe als die Leuchteinheiten auf.

Daneben betrifft die Erfindung ein Kraftfahrzeug, umfassend wenigstens eine Innenbeleuchtungseinrichtung. Die Innenbeleuchtungseinrichtung ist dabei bevorzugt in einem Dachhimmel des Kraftfahrzeugs angeordnet und zur Beleuchtung einer Fahrgastzelle des Kraftfahrzeugs eingerichtet.

Sämtliche Ausführungen zum erfindungsgemäßen Verfahren lassen sich analog auf die erfindungsgemäße Innenbeleuchtungseinrichtung und das erfindungsgemäße Kraftfahrzeug übertragen, so dass auch mit diesen die bereits genannten Vorteile erzielt werden können. Ebenso sind sämtliche Ausführungen zur erfindungsgemäßen Innenbeleuchtungseinrichtung auf das erfindungsgemäße Verfahren übertragbar, wobei die erfindungsgemäße Innenraumbeleuchtung einschließlich ihrer einzelnen Komponenten mit ihren beschriebenen Eigenschaften im Rahmen des erfindungsgemäßen Verfahrens verwendet werden kann.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Frontalansicht eines ersten Ausführungsbeispiels einer erfindungsgemäßen Innenbeleuchtungseinrichtung;
- Fig. 2A bis 2C: jeweils eine perspektivische Ansicht der in Fig. 1 gezeigten Innenbeleuchtungseinrichtung in verschiedenen Bediensituationen;
- Fig. 3A bis 3C: jeweils eine schematische Darstellung der Ansteuerung einer Leuchteinrichtung der in Fig. 1 gezeigten Innenbeleuchtungseinrichtung während der in den Fig. 2A bis 2C gezeigten Bediensituationen;
- Fig. 4: eine Frontalansicht eines zweiten Ausführungsbeispiels einer erfindungsgemäßen Innenbeleuchtungseinrichtung;
- Fig. 5: eine perspektivische Ansicht der in Fig. 4 gezeigten Innenbeleuchtungseinrichtung; und
- Fig. 6: ein erfindungsgemäßes Kraftfahrzeug.

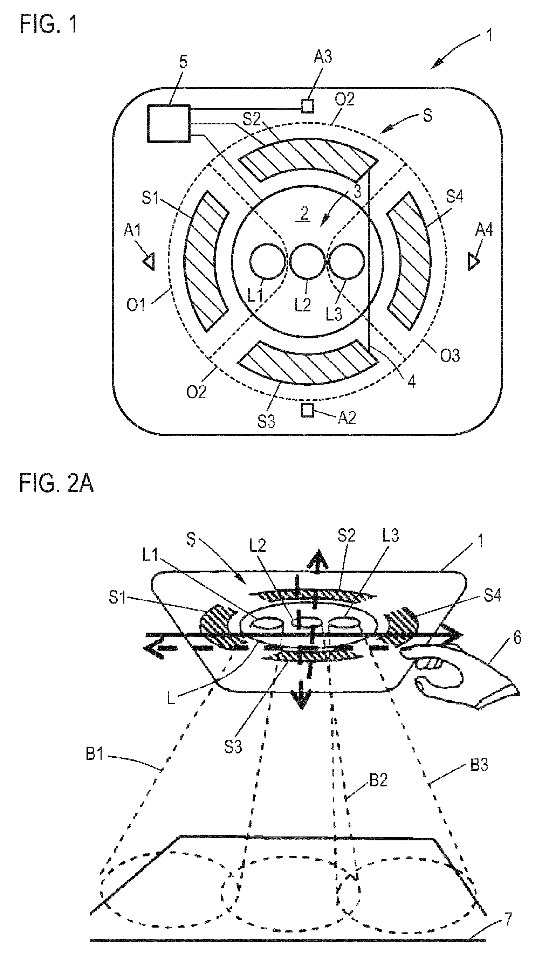

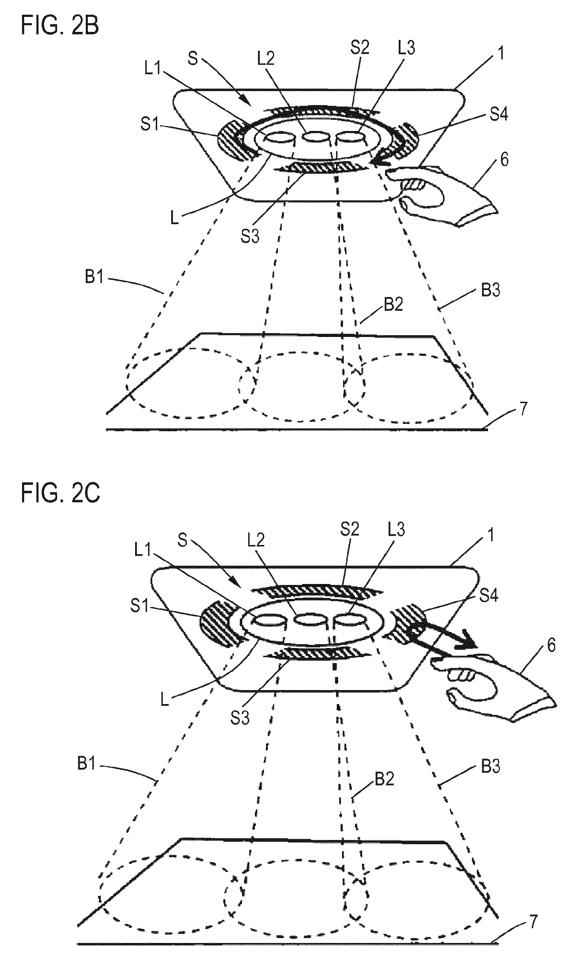

Fig. 1, 2A, 2B, 2C zeigen ein erstes Ausführungsbeispiel einer Innenbeleuchtungseinrichtung 1, umfassend eine Leuchteinrichtung L mit drei Leuchteinheiten L1 bis L3 und eine Sensoreinrichtung S mit vier Sensoreinheiten S1 bis S4.

Fig. 1 zeigt eine Frontalansicht der Innenbeleuchtungseinrichtung 1. Die Leuchteinrichtung L umfasst ein Gehäuse 2, in dem die Leuchteinrichtungen L1 bis L3 aufgenommen und fluchtend angeordnet sind. Jede Leuchteinheit L1 bis L3 ist als Leuchtdiode ausgebildet und weist eine optische Bündelungseinrichtung, beispielsweise eine Linse oder einen Reflektor, auf, so dass sie Licht in einem spitzen Öffnungswinkel unter verschiedenen Abstrahlwinkeln abstrahlt. Alternativ ist auch eine Realisierung der Leuchteinheiten L1 bis L3 als Glühlampe, beispielsweise als herkömmliche Glühfadenglühlampe, Halogenglühlampe oder Gasentladungslampe, oder als ein Array von Leuchtdioden oder Glühlampen denkbar. Das Gehäuse 2 ist frontseitig mit einer transparenten Scheibe 3, durch die das Licht der Leuchteinheiten L1 bis L3 dringen kann, abgeschlossen.

Die Sensoreinrichtung S umfasst einen Erfassungsbereich, der aus Einzelerfassungsbereichen der Sensoreinheiten S1 bis S4 gebildet ist. In dem Erfassungsbereich sind drei Ortsabschnitte 01 bis 03 definiert, denen die Sensoreinrichtung 5 eine im Erfassungsbereich ermittelte Position eines Objekts zuordnet, wozu Sensordaten aller Sensoreinheiten S1 bis S4 gemeinsam ausgewertet werden. Insbesondere ist zur Bildung des Ortsbereichs 02 eine Kopplung 4 zwischen den Sensoreinheiten S2, S3 vorgesehen. Der Leuchteinheit L1 ist dabei der Ortsabschnitt 01, der Leuchteinheit L2 der Ortsabschnitt 02 und der Leuchteinheit L3 der Ortsabschnitt 03 zugeordnet. Ersichtlich sind die Sensoreinheiten S1 bis S4 räumlich benachbart zur Leuchteinrichtung angeordnet, wobei sie eine frontseitige Öffnung des Gehäuses 3 in Umfangsrichtung umgeben. Die Sensoreinrichtungen S1 bis S4 müssen dabei jedoch nicht selbst für einen Nutzer sichtbar sein, es ist jedoch vorteilhaft, wenn sie durch eine geeignete frontseitige Oberflächenkontur oder muldenartige Oberfläche der Innenbeleuchtungseinrichtung 1 taktil für den Nutzer wahrnehmbar sind.

Die Innenbeleuchtungseinrichtung 1 weist ferner vier Anzeigeelemente A1 bis A4 auf, die der Anzeige aktivierter Leuchteinrichtungen L1 bis L3 dienen.

Schließlich umfasst die Innenbeleuchtungseinrichtung 1 eine Steuereinrichtung 5, die mit der Sensoreinrichtung S, symbolisiert durch eine Verbindung mit der Sensoreinheit S2, der Leuchteinheit L und den Anzeigeelementen A1 bis A4, symbolisiert durch eine Verbindung mit dem Anzeigeelement A3, verbunden ist. Die Steuereinrichtung 5 ist zum Steuern der Leuchteinrichtung L in Abhängigkeit von Sensordaten der Sensoreinrichtung S ausgebildet, wobei durch die Steuereinrichtung 5 die Leuchteinheiten L1 bis L3 aktivierbar und deaktivierbar und zusätzlich zur Veränderung ihrer Helligkeit ansteuerbar sind.

Die Fig. 2A bis 2C sind eine perspektivische Ansicht der Innenbeleuchtungseinrichtung 1 während unterschiedlicher Bediensituationen, in denen ein Bedienobjekt 6 in Form eines menschlichen Fingers in den Erfassungsbereich herein- und herausgeführt und dort bewegt wird. Ersichtlich strahlen die Leuchteinheiten L1 bis L3 Licht unter einem spitzen Öffnungswinkel in unterschiedliche Ausleuchtbereiche B1 bis B3 ab, so dass sie auf einem Untergrund 7 einen "Spot" erzeugen.

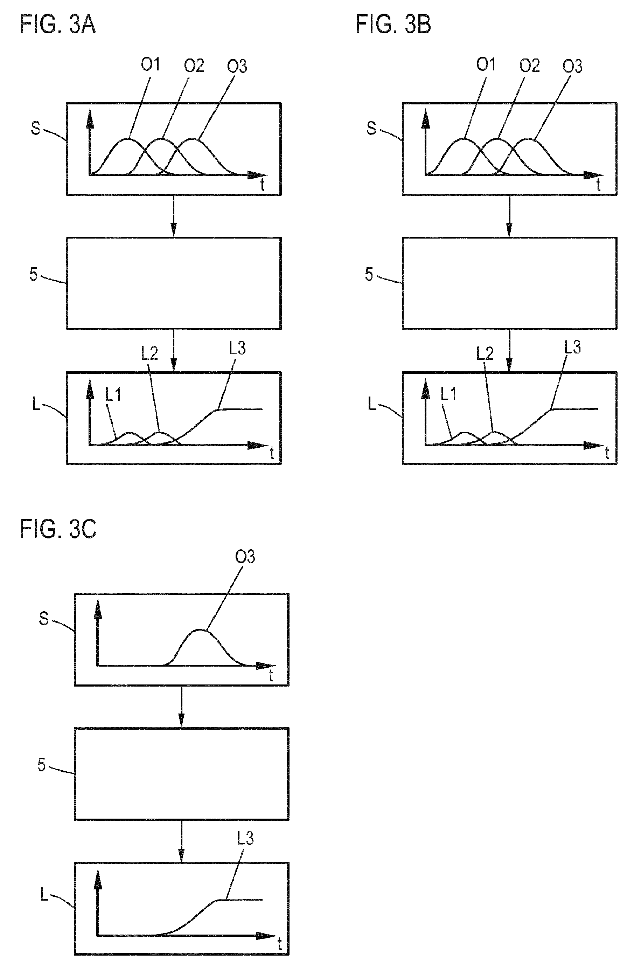

Ein erfindungsgemäßes Verfahren zum Betrieb der Beleuchtungseinrichtung 1, zu dessen Durchführung die Steuereinrichtung 5 ausgebildet ist, wird im Folgenden anhand der Fig. 2A bis 2C und 3A bis 3C erläutert. Dabei sind die Fig. 3A bis 3C jeweils schematische Darstellungen, die eine mittels der Sensoreinrichtung S in den Ortsabschnitten 01 bis 03 detektierte Position des Bedienobjekts 6 über die Zeit darstellen, welche durch die Steuereinrichtung 5 verarbeitet wird, wobei die Steuereinrichtung 5 die Leuchteinrichtung L mit einem zeitlichen Helligkeitsprofil für ihre Leuchteinheiten L1 bis L3 ansteuert.

Fig. 2A und 3A zeigen eine Bediensituation, während der das Bedienobjekt 6 eine Wischgeste ausführt, wobei es waagerecht über die Sensoreinheiten S1, die Leuchteinheiten L1 bis L3 und die Sensoreinheit S4 geführt wird. Der durchgezogene Pfeil zeigt dabei die durchgeführte Bewegungsrichtung, wobei die gestrichelten Pfeile weitere denkbare Bediengesten symbolisiert. Dabei dringt das Bedienobjekt 6, wie in dem oberen Diagramm der Fig. 3A gezeigt, zunächst in den Ortsabschnitt 01 ein und wird vom Sensor S2 erfasst. Durch die weitere Bewegung gelangt das Bedienobjekt 6 anschließend in den Ortsabschnitt 02 und bewegt sich schließlich in den Ortsabschnitt 03. Ersichtlich überlappen sich die Positionsinformationen infolge der räumlichen Ausdehnung des Bedienobjekts 6, obwohl die Ortsabschnitte 01 bis 03 disjunkt definiert sind.

Die Steuereinrichtung 5 steuert während dieses Bewegungsverlaufs zunächst die Leuchteinrichtung L1 mit einem zeitlich ansteigenden Helligkeitsverlauf an und deaktiviert diese wiederum über einen vorgegebenen Helligkeitsverlauf in dem Moment, in dem das Bedienobjekt 6 im Ortsabschnitt 02 erfasst wird. Ebenso wird die Leuchteinheit L2 deaktiviert, wenn das Bedienobjekt 6 im Ortsabschnitt 03 erfasst wird, wobei gleichzeitig die Leuchteinrichtung L3 aktiviert wird. Da das Bedienobjekt 6 danach den Erfassungsbereich E verlässt, mithin in keinem weiteren Ortsabschnitt 03 detektiert wird, verbleibt die Leuchteinrichtung L3 im aktivierten Zustand. Die vorgesehenen Helligkeitsverläufe für das Aktivieren und Deaktivieren sind vorliegend als eine S-förmig verlaufende Helligkeitsfunktion über die Zeit definiert, die einen Wendepunkt aufweist. Durch das Vorgeben des zeitlichen Helligkeitsverlaufs wird mithin ein weich erscheinendes Aktivieren der Leuchteinheit L3 ermöglicht, was auch auf dem Untergrund 7 einem mechanischen Verschwenken einer kardanischen Innenbeleuchtungseinrichtung in Richtung der Wischgeste ähnelt.

Die Fig. 2B und 3B zeigen die Innenbeleuchtungseinrichtung 1 während einer Bediensituation, in der das Bedienobjekt 6 eine Slidinggeste durch kreisbogenförmiges Streichen von der Sensoreinheit S1 zur Sensoreinheit S4 um die Leuchteinrichtung L durchgeführt. Dabei wird das Bedienobjekt 6 in den Ortsabschnitten 01 bis 03 nacheinander erfasst. Das daraus resultierende Helligkeitsprofil ist dementsprechend im Wesentlichen identisch zu dem der zuvor beschriebenen Wischgeste.

Die Fig. 2C und 3C zeigen die Innenbeleuchtungseinrichtung in einer Bediensituation, in der das Bedienobjekt eine Tippgeste durchführt. Dazu dringt das Bedienobjekt 6 in den Ortsabschnitt 03 ein und verlässt diesen dann unmittelbar danach wieder. Da zuvor weder die Leuchteinheit L1 noch die Leuchteinheit L2 aktiviert waren, erfolgt keine Deaktivierung durch die Steuerungseinrichtung 5 und die Leuchteinheit L3 wird entsprechend des vorgegebenen Helligkeitsprofils aktiviert und verbleibt in diesem Zustand.

In einer nicht gezeigten Bediensituation, die der zuvor genannten entspricht, in der zuvor jedoch die Leuchteinheit L1 bereits angeschaltet war, erfolgt vor dem Aktivieren der Leuchteinheit L3 zunächst ein Deaktivieren der Leuchteinheit L1 und ein kurzzeitiges Aktivieren mit anschließendem Deaktivieren der Leuchteinheit L2, so dass durch eine solche Tippgeste ein Überblenden von der Leuchteinheit L1 über die Leuchteinheit L2 zur Leuchteinheit L3 erfolgt.

In einer weiteren nicht gezeigten Bediensituation, die der in den Fig. 2B und 3B entspricht, wobei jedoch die Slidinggeste weiter vom Ortsabschnitt 03 in den Ortsabschnitt 02 geführt wird, erfasst die Steuereinrichtung 5 dies als eine Positionsspur, wonach sie als eine vorgegebene Steueraktion alle Leuchteinheiten L1, L2, L3 aktiviert. Diese werden jedoch nicht auf ihre größtmöglich ansteuerbare Helligkeit, sondern auch einen geringen Wert von 60 %, angesteuert. Bei einer Wiederholung dieser Bediengeste werden in Abhängigkeit der so erfassten Positionsspur und des aktivierten Zustands aller Leuchteinheiten L1 bis L3 diese vollständig deaktiviert.

Während der den in den Fig. 2A bis 2C und 3A bis 3C gezeigten Bediensituationen wird nach erfolgter Aktivierung der Leuchteinheit L3 das Anzeigeelement A4 aktiviert und zeigt dem Nutzer somit die aktuelle Leuchtrichtung an.

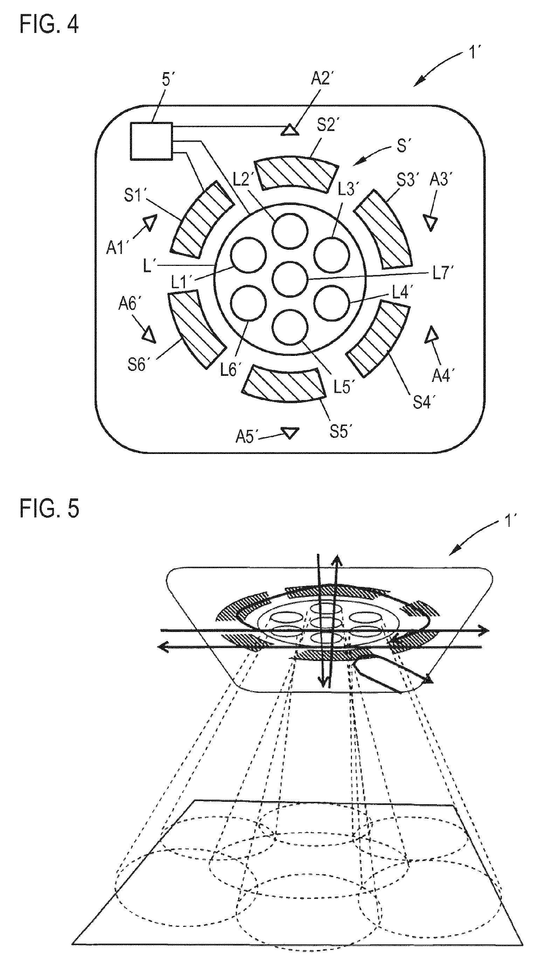

Die Fig. 4 und 5 zeigen ein zweites Ausführungsbeispiel einer Innenbeleuchtungseinrichtung 1', welche der zuvor beschriebenen Innenbeleuchtungseinrichtung 1 entspricht, jedoch sieben Leuchteinheiten L1' bis L7' einer Leuchteinrichtung L' aufweist. Zudem weist eine Sensoreinrichtung S' sechs Sensoreinheiten S1' bis S6' auf, wobei sechs Anzeigeelemente A1' bis A6' und eine Steuereinrichtung 5' vorgesehen sind.

Fig. 4 ist eine Frontalansicht der Innenbeleuchtungseinrichtung 1', welche analog zu der Innenbeleuchtungseinrichtung 1 betrieben wird, wobei hier eine Wischgeste und eine Slidinggeste nicht einen identischen Lichtverlauf erzeugen: Bei einer Wischgeste von der Sensoreinheit S1' zur Sensoreinheit S4' über die Leuchteinheiten L1' L7' und L4' werden nacheinander die Leuchteinheiten L1' und L7' aktiviert und deaktiviert, wonach die Leuchteinheit L4' aktiviert wird und verbleibt. Bei einer kreisbogenförmigen Slidinggeste von der Sensoreinheit S1' zur Sensoreinheit S4' über die Sensoreinheit S2' und die Sensoreinheit S3' werden hingegen nacheinander die Leuchteinrichtungen L1' L2' und L3' aktiviert und deaktiviert, wonach die Leuchteinheit L4' aktiviert wird und in diesem Zustand verbleibt. In diesem Fall ähnelt das bediengestengesteuerte Leuchtverhalten der Innenbeleuchtungseinrichtung 1', noch stärker demjenigen einer mechanischen kardanischen Innenbeleuchtungseinrichtung.

Fig. 5 ist eine perspektivische Ansicht der Innenbeleuchtungseinrichtung 1', wobei durch Pfeile mögliche Bewegungsgesten dargestellt sind.

Darüber hinaus sind weitere den Innenbeleuchtungseinrichtung 1,1' entsprechende Ausführungsbeispiele denkbar, beispielsweise mit fünf quincunxförmig angeordneten Leuchteinheiten und vier Sensoreinheiten oder mit neun in einem quadratischen 3x3-Raster angeordneten Leuchteinheiten und acht Sensoreinheiten.

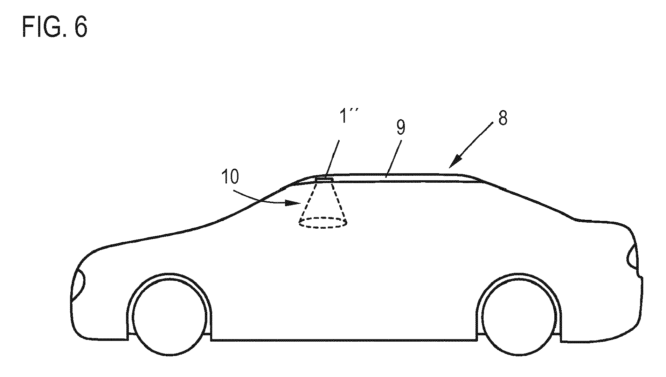

Fig. 6 ist eine Prinzipskizze eines Ausführungsbeispiels eines Kraftfahrzeugs 8, umfassend eine Innenbeleuchtungseinrichtung 1", die in einem Dachhimmel 9 des Kraftfahrzeugs angeordnet ist und eine Fahrgastzelle 10 des Kraftfahrzeugs 8 ausgeleuchtet.

## Patentansprüche

1. Verfahren zum Betrieb einer Innenbeleuchtungseinrichtung (1, 1', 1") für ein Kraftfahrzeug (8), umfassend eine Leuchteinrichtung (L, L') und eine Sensoreinrichtung (S, S'), welche eine Position eines Bedienobjekts (6) für die Leuchteinrichtung (L, L') in ihrem Erfassungsbereich erfasst, wobei die Leuchteinrichtung (L, L') in Abhängigkeit von Sensordaten der Sensoreinrichtung (S, S') gesteuert wird,
**dadurch gekennzeichnet,**
**dass** die Leuchteinrichtung (L, L') mehrere ansteuerbare Leuchteinheiten (L1 - L3, L1' - L7') aufweist, welchen jeweils ein in dem Erfassungsbereich definierter Ortsabschnitt (01 - 03) zugeordnet ist, wobei bei in einem Ortsabschnitt (O1 - 03) detektiertem Bedienobjekt (6) die zugeordnete Leuchteinheit (L1 - L3, L1' - L7') aktiviert wird und aktivierte, nicht dem Ortsabschnitt (O1 - 03) zugeordnete Leuchteinheiten (L1 - L3, L1' - L7') deaktiviert werden.

2. Verfahren nach Anspruch 1,
**dadurch gekennzeichnet,**
**dass** disjunkt definierte Ortsabschnitte (O1 - 03) verwendet werden.

3. Verfahren nach Anspruch 1 oder 2,
**dadurch gekennzeichnet,**
**dass** nacheinander mehrere eine Positionsspur bildende Positionen des Bedienobjekts (6) erfasst werden, wonach in Abhängigkeit der erfassten Positionsspur eine vorgegebene Steueraktion ausgeführt wird.

4. Verfahren nach Anspruch 3,
**dadurch gekennzeichnet,**
**dass** eine ein Aktivieren aller Leuchteinheiten (L1 - L3, L1' - L7') auslösende Steueraktion und/oder eine ein Deaktivieren aller Leuchteinheiten (L1 - L3, L1' - L7') auslösende Steueraktion verwendet wird.

5. Verfahren nach einem der vorhergehenden Ansprüche,
**dadurch gekennzeichnet,**
**dass** die Leuchteinheiten (L1 - L3, L1' - L7') gemäß eines vorgegebenen oder vorgebbaren zeitlichen Helligkeitsverlaufs aktiviert und/oder deaktiviert werden.

6. Innenbeleuchtungseinrichtung (1, 1', 1") für ein Kraftfahrzeug (8), umfassend eine Leuchteinrichtung (L, L'), eine Sensoreinrichtung (S, S'), welche zum Erfassen einer Position eines Bedienobjekts (6) für die Leuchteinrichtung (L, L') in ihrem Erfassungsbereich ausgebildet ist, und eine zum Steuern der Leuchteinrichtung (L, L') in Abhängigkeit von Sensordaten der Sensoreinrichtung (S, S') ausgebildete Steuereinrichtung (S, S'),
**dadurch gekennzeichnet,**
**dass** die Leuchteinrichtung (L, L') mehrere ansteuerbare Leuchteinheiten (L1 - L3, L1' - L7') aufweist, welchen jeweils ein in dem Erfassungsbereich definierter Ortsabschnitt (O1 - 03) zugeordnet ist, wobei die Steuereinrichtung (S, S') zur Durchführung eines Verfahrens nach einem der vorhergehenden Ansprüche ausgebildet ist.

7. Innenbeleuchtungseinrichtung nach Anspruch 6,
dass die Leuchteinheiten (L, L') unterschiedliche Abstrahlwinkel und/oder Ausleuchtbereiche aufweisen.

8. Innenbeleuchtungseinrichtung nach Anspruch 6 oder 7,
**dadurch gekennzeichnet,**
**dass** die Sensoreinrichtung (S, S') räumlich benachbart zur Leuchteinrichtung (L, L') angeordnet ist.

9. Innenbeleuchtungseinrichtung nach einem der Ansprüche 6 bis 8,
**dadurch gekennzeichnet,**
**dass** die Sensoreinrichtung (S, S') mehrere Sensoreinheiten (S1 - S4, S1' - S6') aufweist, wobei Einzelerfassungsbereiche der Sensoreinheiten (S1 - S4, S1'- S6') den Erfassungsbereich bilden.

10. Innenbeleuchtungseinrichtung nach Anspruch 9,
**dadurch gekennzeichnet,**
**dass** wenigstens zwei Leuchteinheiten (L1 - L3, L1' - L7') und wenigstens zwei Sensoreinheiten (S1 - S4, S1' - S6') fluchtend angeordnet sind.

11. Innenbeleuchtungseinrichtung nach einem der Ansprüche 6 bis 10,
**dadurch gekennzeichnet,**
**dass** wenigstens ein mit der Steuereinrichtung (S, S') verbundenes und wenigstens einer Leuchteinheit (L, L') zugeordnetes Anzeigeelement (A1 - A4, A1' - A6') vorgesehen ist, welches zum Anzeigen der wenigstens einen aktivierten Leuchteinheit (L, L') ansteuerbar ist.

12. Kraftfahrzeug (8),
umfassend wenigstens eine Innenbeleuchtungseinrichtung (1") nach einem der Ansprüche 6 bis 11.
